# EUROPEAN PATENT APPLICATION

(11) **EP 4 586 659 A1**
(43) Date of publication of application: **16.07.2025**
(21) Application number: 23863066.9
(22) Date of filing: 31.08.2023
(51) Int. Cl.: H04W 8/00, H04W 92/18, H04W 76/14, H04W 48/16, H04W 88/04

(54) **SIDELINK COMMUNICATION DEVICE, CONTROL METHOD, PROGRAM, AND SIDELINK COMMUNICATION SYSTEM**

(30) Priority: 08.09.2022 JP 2022142811
(71) Applicant: CANON KABUSHIKI KAISHA, Tokyo 146-8501 (JP)
(72) Inventor: NISHIYAMA Kosuke, Tokyo 146-8501 (JP)
(74) Representative: Canon Europe Limited
(86) International application number: PCT/JP2023/031663
(87) International publication number: WO 2024/053528

(57) **Abstract**

A sidelink communication device includes a reception unit (105) configured to receive a detection signal for detecting each of a plurality of communication devices (10A, 10B, 10C) as a sidelink device, the detection signal being transmitted from the plurality of communication devices (10A, 10B, 10C), and a selection unit (101) configured to select a target device to be connected as a relay device from among the plurality of communication devices (10A, 10B, 10C) detected upon reception of the detection signal, wherein the reception unit (105) receives a relay time parameter value transmitted from each of the plurality of communication devices before a connection is established with the target device, wherein the relay time parameter is associated with a time available for each of the plurality of communication devices to function as a relay device, and wherein the selection unit (101) selects the target device based on the relay time parameter value corresponding to each of the plurality of communication devices.

## Description

### Technical Field

The present disclosure relates to a sidelink communication device.

### Background Art

Formulation of specifications of Long Term Evolution (LTE) and 5G New Radio (NR) of 3rd Generation Partnership Project (3GPP^{®}) has recently been developed. Among the specifications, a standard specification called sidelink communication (hereinafter, sidelink) has been formulated. This specification implements direct wireless communication using an interface called PC5 between terminals (user equipment (UEs)) without involving a mobile communication network (core network).

In addition, the 3GPP has been developing the formulation of a specification for expanding a sidelink communication range by a sidelink relay function for relaying sidelink communication via a relay device (relay UE).

Patent Literature 1 discusses a technique in which a terminal (UE) that is located outside of a coverage of a base station is connected to a relay device installed within the coverage of the base station via sidelink communication, thereby making it possible to establish communication with the base station.

### Citation List

### Patent Literature

PTL 1: Japanese Patent Application Laid-Open No. 2021-078140

### Summary of Invention

### Technical Problem

However, in a case where one communication device selects another communication device as a relay device from among a plurality of communication devices and is connected to the selected relay device via sidelink communication to communicate with a base station, it is difficult to select an appropriate relay device from among the plurality of communication devices. This is because a time available for each communication device to function as a relay device may differ.

The present invention has been made in view of at least one of the above-described issues. One aspect of the present disclosure is to enable selection of an appropriate relay device from among a plurality of communication devices.

### Solution to Problem

According to an aspect of the present invention, sidelink communication device includes a reception unit configured to receive a detection signal for detecting each of a plurality of communication devices as a sidelink device, the detection signal being transmitted from the plurality of communication devices, and a selection unit configured to select a target device to be connected as a relay device from among the plurality of communication devices detected upon reception of the detection signal, wherein the reception unit receives a relay time parameter value transmitted from each of the plurality of communication devices before a connection is established with the target device, wherein the relay time parameter is associated with a time available for each of the plurality of communication devices to function as a relay device, and wherein the selection unit selects the target device based on the relay time parameter value corresponding to each of the plurality of communication devices.

### Advantageous Effects of Invention

According to one aspect of the present disclosure, it is possible to select an appropriate relay device from among a plurality of communication devices.

### Brief Description of Drawings

[Fig. 1] Fig. 1 is a diagram illustrating a configuration example of a communication system according to a first exemplary embodiment.
[Fig. 2] Fig. 2 is a block diagram illustrating a functional configuration example of a communication device.
[Fig. 3] Fig. 3 is a diagram illustrating an example of a format of a discovery response message according to the first exemplary embodiment.
[Fig. 4] Fig. 4 is a flowchart illustrating discovery processing in a terminal 10 according to the first exemplary embodiment.
[Fig. 5] Fig. 5 is a flowchart illustrating discovery response processing in a terminal 10A, a terminal 10B, and a terminal 10C according to the first exemplary embodiment.
[Fig. 6] Fig. 6 is a sequence diagram illustrating an operation example of the communication system according to the first exemplary embodiment.
[Fig. 7] Fig. 7 is a diagram illustrating an example of a format of a discovery request message in a case where battery information is included.
[Fig. 8] Fig. 8 is a diagram illustrating an example of a format of a discovery response message according to a second exemplary embodiment.
[Fig. 9] Fig. 9 is a flowchart illustrating discovery processing in the terminal 10 according to the second exemplary embodiment.
[Fig. 10] Fig. 10 is a flowchart illustrating discovery response processing in the terminal 10A, the terminal 10B, and the terminal 10C according to the second exemplary embodiment.
[Fig. 11] Fig. 11 is a sequence diagram illustrating an operation example of a communication system according to the second exemplary embodiment.
[Fig. 12] Fig. 12 is a diagram illustrating an example of a format of a discovery response message according to a third exemplary embodiment.
[Fig. 13] Fig. 13 is a flowchart illustrating discovery processing in the terminal 10 according to the third exemplary embodiment.
[Fig. 14] Fig. 14 is a flowchart illustrating discovery response processing in the terminal 10A, the terminal 10B, and the terminal 10C according to the third exemplary embodiment.
[Fig. 15] Fig. 15 is a sequence diagram illustrating an operation example of a communication system according to the third exemplary embodiment.

### Description of Embodiments

Exemplary embodiments will be described in detail below with reference to the attached drawings. Note that the following exemplary embodiments are not intended to limit the scope of the claimed invention. Multiple features are described in the exemplary embodiments, but limitation is not made to an invention that requires all such features, and multiple such features may be combined as appropriate. Furthermore, in the attached drawings, the same reference numerals are given to the same or similar configurations, and redundant description thereof is omitted.

Sidelink communication is based on a premise that a sidelink function of a terminal is constantly ON and power consumption is not taken into consideration. Accordingly, sidelink communication can be established even with a user equipment (UE) with a low battery remaining amount, so that a long-term sidelink communication cannot be ensured.

In a case where a user equipment (UE) having a sidelink relay function is driven by a battery under the above-described circumstances, the power supply is finite and thus the available time is limited. Accordingly, for example, if a UE (remote UE) that intends to use a sidelink relay intends to establish long-term communication, a UE (relay UE) that provides the sidelink relay needs to have a sufficient battery remaining amount for driving the UE for a long period of time.

There are issues that if the battery remaining amount of the relay UE is small, the available time of the relay UE decreases, and if the relay UE is out of battery, the remote UE is disconnected from a network until communication can be established with another relay UE.

A communication system and the like in which the above-described issues are taken into consideration are disclosed below.

### <First Exemplary Embodiment>

### [Configuration of System]

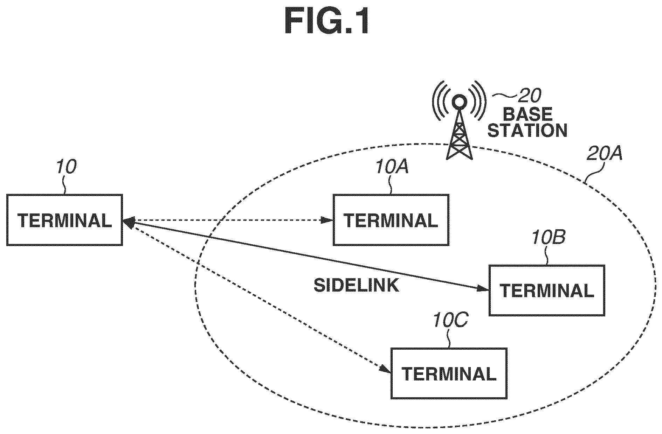

Fig. 1 is a diagram illustrating a configuration example of a sidelink communication system.

In Fig. 1, a terminal 10 (an example of a sidelink device) serving as a remote UE is located outside of a range of a communication area 20A of a base station 20. The terminal 10 searches for a device (UE) to be connected so that sidelink relay communication can be established.

In Fig. 1, terminals 10A, 10B, and 10C serving as a relay UE (an example of a sidelink device and a target device) (examples of a plurality of communication devices) are terminals that support sidelink relay communication. These terminals are located within the range of the communication area 20A of the base station 20 and are configured to respond to the search from the terminal 10. While the present exemplary embodiment assumes a case where a smartphone or the like is used as the terminal that supports sidelink relay communication, the terminal is not limited to a smartphone or the like. For example, communication terminals such as a tablet terminal and a personal computer (PC), wearable terminals such as a smartwatch and a head-mounted display, a car navigation device installed in an automobile, and the like may be used.

Each of the terminal 10A, the terminal 10B, and the terminal 10C holds a parameter (hereinafter, "relay time parameter") associated with a time available for the corresponding terminal (its own terminal) to function as a relay device. The relay time parameter indicates, for example, a power supply type (whether to use a battery), a battery type, a battery remaining amount, a service available time based on the battery remaining amount, or the like.

### [Functional Configuration of Device]

Next, a functional configuration of a communication device 100 according to the present exemplary embodiment will be described. Note that configurations of functional blocks to be described below are merely examples. Some (or all in some cases) of the functional blocks to be described below may be replaced with other functional blocks having similar functions, some functional blocks may be omitted, or further functional blocks may be added. One of the functional blocks to be described below may be divided into a plurality of functional blocks, or a plurality of functional blocks may be integrated into one functional block.

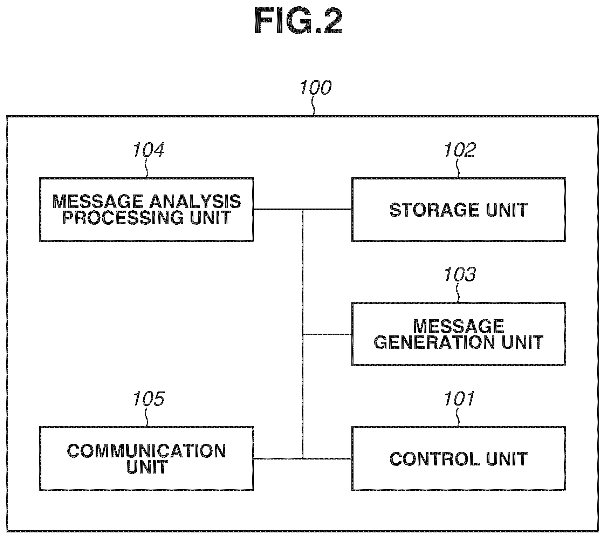

Fig. 2 is a block diagram illustrating an example of the functional configuration of the communication device.

The communication device 100 composed of each of the terminal 10, the terminal 10A, the terminal 10B, and the terminal 10C includes a configuration illustrated in Fig. 2. Specifically, the communication device 100 includes a control unit 101 (an example of a selection unit), a storage unit 102, a message generation unit 103, a message analysis processing unit 104, and a communication unit 105 (an example of a transmission unit and a reception unit).

The control unit 101 controls the operation of the communication device 100. The control unit 101 is composed of, for example, one or more processors such as a central processing unit (CPU) or a micro processing unit (MPU), and executes computer programs loaded into a random access memory (RAM) as the storage unit 102 to thereby control the overall operation of the communication device. Note that reception control and transmission control that are performed by the terminal 10 based on flowcharts to be described below are implemented such that the processor such as the CPU or the MPU of the control unit 101 and hardware such as the communication unit 105 operate in cooperation.

The storage unit 102 is a RAM or a non-volatile storage area that stores control programs to be used for the control unit 101 to perform control processing, other information, and information related to communication. Control programs stored in the non-volatile storage area are loaded into the RAM and are executed by the processor constituting the control unit 101. Thus, the control unit 101 and the storage unit 102 function as a so-called computer.

The message generation unit 103 generates a discovery message to be transmitted to detect a UE, and other messages.

The message analysis processing unit 104 analyzes the discovery message and other messages received from another communication device. Note that the functions corresponding to the generation unit 103 and the analysis processing unit 104 may be implemented as software modules to be implemented by the control unit 101.

The communication unit 105 performs cellular network communication, such as Long-Term Evolution (LTE) or 5G, with the base station 20 (Fig. 1) compliant with 3rd Generation Partnership Project (3GPP^{®}) standards. Further, the communication unit 105 transmits and receives information to and from another communication terminal that supports sidelink communication via sidelink communication. The communication unit 105 performs processing of transmitting messages generated by the message generation unit 203, and processing of receiving messages from another terminal (UE).

As described above, the operation of the communication device 100 can be implemented such that the control unit 101 executes control programs stored in the storage unit 102, to thereby execute calculation and processing of information and execute control of each piece of hardware.

### [Processing Example]

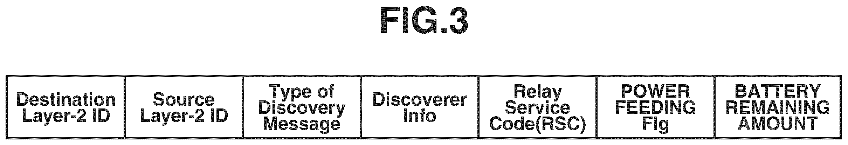

Fig. 3 is a diagram illustrating an example of a format of a discovery response message.

In Fig. 3, Layer-2 ID representing a destination of information is stored as "Destination Layer-2 ID". Layer-2 ID representing an information transmission source is stored as "Source Layer-2 ID". Information indicating the type of this message is stored as "Type of Discovery Message". Identification information about the UE that has transmitted the discovery response message is stored as "Discover Info". Identification information about a connection service provided by the UE that has transmitted the discovery response message is stored as "Relay Service Code (RSC)".

In Fig. 3, information indicating whether the corresponding terminal is receiving power fed from a power supply is stored as "Power Feeding Flag (Flg)". Specifically, if the corresponding terminal is receiving power fed from another power supply, "ON" is stored as "Power Feeding Flg", and if the corresponding terminal is driven by the battery of the corresponding terminal, "OFF" is stored as "Power Feeding Flg". Further, in Fig. 3, the battery remaining amount of the corresponding terminal is stored as "Battery Remaining Amount". In the present exemplary embodiment, "Power Feeding Flg" and "Battery Remaining Amount" correspond to the relay time parameter.

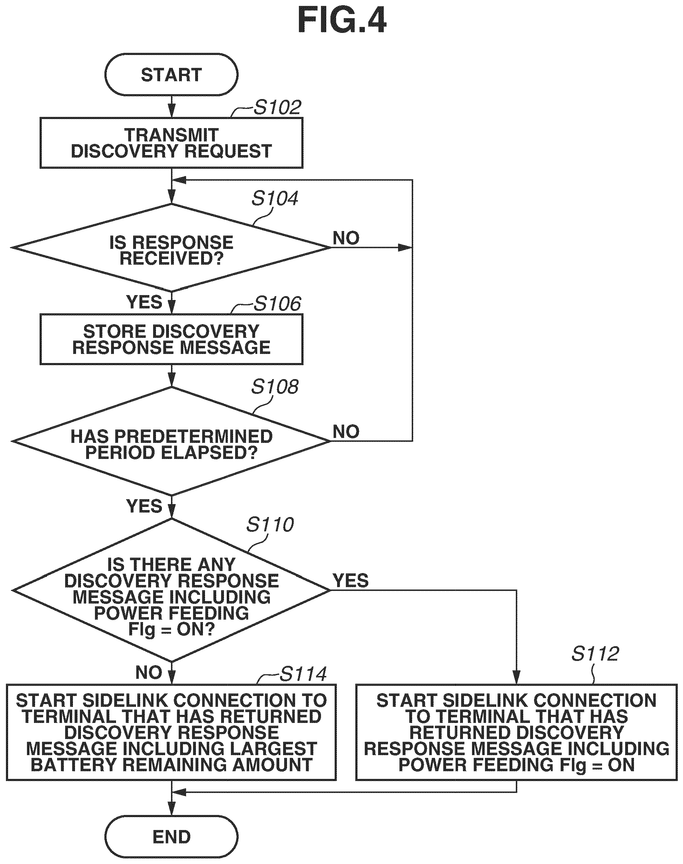

Fig. 4 is a flowchart illustrating discovery processing in the terminal 10.

In step S102 of Fig. 4, the control unit 101 of the communication device 100 (Fig. 2) composed of the terminal 10 activates the message generation unit 103 to generate a discovery request message, and the communication unit 105 performs broadcast transmission of the discovery request message. A discovery signal serving as the discovery request message may be Soliciation Message. Specifically, the discovery signal may be a Soficiation Message for 5G ProSe direct discovery or 5G ProSe UE-to-Network Relay Discovery. Note that ProSe stands for Proximity based Services.

In step S104, the control unit 101 causes the communication unit 105 to await a discovery response message as a detection signal to be transmitted from another terminal. If the discovery response message is received, the processing proceeds to step S106. The discovery response signal serving as the discovery response message may be a Response Message for the above-described Soliciation Message.

In step S106, the control unit 101 stores the discovery response message, the reception of which is confirmed in step S104, in the storage unit 102.

In step S108, the control unit 101 determines whether a predetermined period has elapsed after the transmission of the discovery request message. If the determination result indicates YES, the processing proceeds to step S110. If the determination result indicates NO, the processing proceeds to step S104.

In step S110, the control unit 101 activates the message analysis processing unit 204 to analyze the content of the discovery response message stored in step S106. Further, the control unit 101 determines by the message analysis processing unit 104 whether the discovery response messages stored in step S106 include the discovery response message in which "ON" is stored as "Power Feeding Flg" (Fig. 3). If the determination result of the control unit 101 indicates YES, the processing proceeds to step S112. If the determination result indicates NO, the processing proceeds to step S114.

In step S112, the control unit 101 selects a connection destination from among the terminals (UEs) that have returned the discovery response message in which "ON" is stored as "Power Feeding Flg". Further, the control unit 101 starts a sidelink connection with the selected terminal (UE), and terminates the processing. Thus, communication for the sidelink connection is established between the terminal 10 and the selected terminal (UE). In other words, communication using the selected terminal (UE) as a relay device can be established.

In step S114, the message analysis processing unit 204 checks "Battery Remaining Amount" (Fig. 3) in the received discovery response message, and selects the terminal (UE) with the largest battery remaining amount as a connection destination. In this case, a terminal with a battery remaining amount being more than or equal to a threshold may be selected as the connection destination. Further, the control unit 101 starts the sidelink connection with the selected terminal (UE), and terminates the processing. Thus, communication for the sidelink connection is established between the terminal 10 and the selected terminal (UE). In other words, communication using the selected terminal (UE) as a relay device can be established.

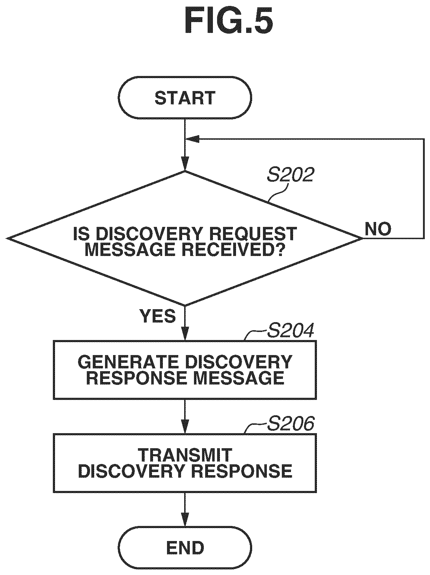

Fig. 5 is a flowchart illustrating discovery response processing in the terminal 10A, the terminal 10B, and the terminal 10C. In step S202 of Fig. 5, the control unit 101 of the communication device 100 composed of each of the terminal 10A, the terminal 10B, and the terminal 10C causes the communication unit 105 to await a discovery request message. If the control unit 101 has received the discovery request message, the processing proceeds to step S204.

In step S204, the control unit 101 activates the message generation unit 103 to generate a discovery response message (Fig. 3). In this case, the message generation unit 103 checks a battery state of the corresponding terminal, and stores parameters corresponding to "Power Feeding Flg" and "Battery Remaining Amount" in the discovery response message.

In step S206, the control unit 101 causes the communication unit 105 to transmit the discovery response message generated in step S204 to the transmission source (UE) that has transmitted the discovery request message, and terminates the processing.

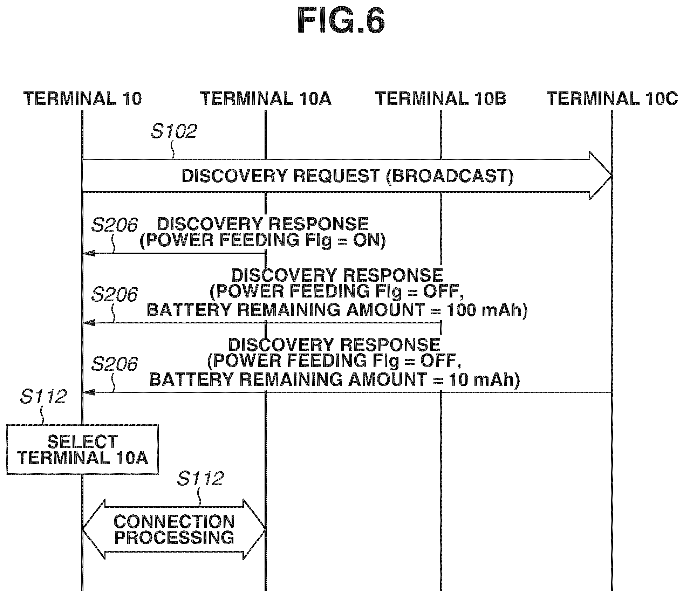

Fig. 6 is a sequence diagram illustrating an operation example of the communication system according to the present exemplary embodiment. Step numbers in Fig. 6 correspond to the respective processes illustrated in Fig. 4 and Fig. 5.

In the example of Fig. 6, the terminal 10A is receiving power fed from another power supply, instead of receiving power from its own battery. The terminal 10B and the terminal 10C are each driven by the battery of the corresponding terminal (their own terminal), and have battery remaining amounts of 100 mAh and 10 mAh, respectively.

As illustrated in Fig. 6, the terminal 10 causes the message generation unit 103 to generate a discovery request message, and performs broadcast transmission of the discovery request message (step S102).

Upon receiving the discovery request message from the terminal 10 (step S202; YES), the terminal 10A generates a discovery response message (step S204) and returns the discovery response message to the terminal 10 (step S206). In this case, since the terminal 10A is receiving power fed from another power supply, "ON" is set as "Power Feeding Flg" in the discovery response message.

Similarly, upon receiving the discovery request message from the terminal 10 (step S202; YES), the terminal 10B generates a discovery response message (step S204) and returns the discovery response message to the terminal 10 (step S206). In this case, the terminal 10A operates using power from its own battery, and thus "OFF" is set as "Power Feeding Flg" in the discovery response message. Further, "100 mAh" is set as "Battery Remaining Amount" in the discovery response message.

Similarly, upon receiving the discovery request message from the terminal 10 (step S202; YES), the terminal 10C generates a discovery response message (step S204) and returns the discovery response message to the terminal 10 (step S206). In this case, the terminal 10A operates using power from its own battery, and thus "OFF" is set as "Power Feeding Flg" in the discovery response message. Further, "10 mAh" is set as "Battery Remaining Amount" in the discovery response message.

Next, the terminal 10 selects the terminal 10A as a connection destination UE based on "Power Feeding Flg" and "Battery Remaining Amount" in the received discovery response message, and establishes a sidelink connection with the terminal 10A (step S112).

Note that if the terminal 10A is driven by its own battery, like the terminal 10B and the terminal 10C, the terminal 10 selects the terminal with the largest "Battery Remaining Amount" in the discovery response message as illustrated in Fig. 4. Then, the terminal 10 establishes a sidelink connection with the selected terminal (step S114). Alternatively, the terminal 10 may establish a sidelink connection with one of the terminals with the battery remaining amount being more than or equal to the threshold based on "Battery Remaining Amount" in the discovery response message. In this case, if there is a plurality of terminals with the battery remaining amount being more than or equal to the threshold, the terminal with the largest "Battery Remaining Amount" may be selected, or terminals other than the terminal with the largest "Battery Remaining Amount" may be selected based on a combination with other factors.

As described above, the terminal 10 selects a UE that can provide the sidelink function for a longer period of time based on the relay time parameter, thereby making it possible to establish a connection with the UE.

In the exemplary embodiment described above, the relay time parameter is always stored in the discovery response message. However, the discovery request message to be transmitted may include battery information (information requesting a reply of the relay time parameter).

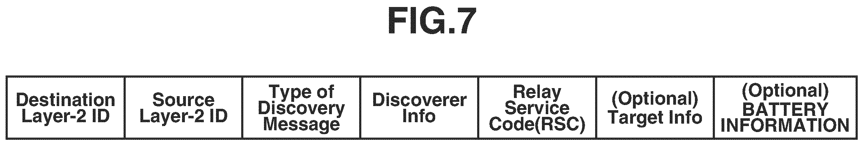

Fig. 7 is a diagram illustrating an example of a format of a discovery request message in a case where battery information is included.

In Fig. 7, Layer-2 ID representing a destination of information is stored as "Destination Layer-2 ID". Layer-2 ID representing an information transmission source is stored as "Source Layer-2 ID". Information indicating the type of this message is stored as "Type of Discovery Message". Identification information about the UE that has transmitted the discovery request message is stored as "Discoverer Info". Identification information about a connection service provided by the UE that has transmitted the discovery response message is stored as "Relay Service Code (RSC)". Identification information about a discovery target UE is stored as "Target Info". "Target Info" may be stored when the discovery target UE is already identified. In the case of requesting a reply of the relay time parameter, "ON" is stored as "Battery Information".

If the discovery request message includes "Battery Information", in step S102 of Fig. 4, the message generation unit 103 generates a discovery request message illustrated in Fig. 7, and the communication unit 105 performs broadcast transmission of the discovery request message.

In step S204 of Fig. 5, the message generation unit 103 may store the relay time parameter in the discovery response message only when battery information is included in the discovery request message.

With this configuration, for example, in time of emergency, the connection destination UE can be selected based on the relay time parameter included in the discovery response message. Thus, a flexible operation depending on a situation, such as presence or absence of emergency, can be performed.

Note that the present exemplary embodiment illustrates a case ("Model B" in TR23.752 6.19.1.1) where the discovery response message is returned in response to the discovery request message. However, the same processing can also be applied to a case ("Model A" in TR23.752 6.19.1.1) where the relay UE transmits a discovery signal without receiving any discovery request. In the latter case, the relay time parameter can be included in the discovery signal, and the terminal 10 can select a terminal to be used as a relay device based on the relay time parameter included in the discovery signal. This processing makes it possible to determine a connection target terminal. The same holds true for second and third exemplary embodiments to be described below. The discovery request message is an example of a discovery request signal.

### <Second Exemplary Embodiment>

The first exemplary embodiment described above illustrates an example where a relay UE that can be connected for a longer period of time is selected and connected based on "Power Feeding Flg" and "Battery Remaining Amount" stored in the discovery response message. A second exemplary embodiment illustrates an example where a relay UE that can be connected for a longer period of time is selected and connected based on "Service Available Time" stored in the discovery response message.

The system configuration (Fig. 1) and the functional configuration (Fig. 2) of the communication device 100 according to the second exemplary embodiment are similar to those of the first exemplary embodiment. Differences from the first exemplary embodiment will be described below.

### [Processing Example]

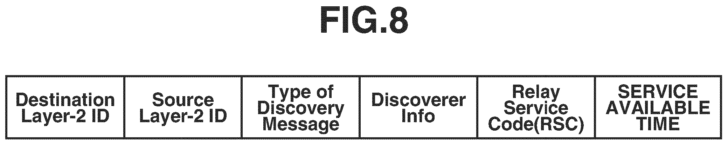

Fig. 8 is a diagram illustrating an example of a format of a discovery response message according to the second exemplary embodiment.

In Fig. 8, Layer-2 ID representing a destination of information is stored as "Destination Layer-2 ID". Layer-2 ID representing an information transmission source is stored as "Source Layer-2 ID". Information indicating the type of this message is stored as "Type of Discovery Message". Identification information about the UE that has transmitted the discovery response message is stored as "Discover Info". Identification information about a connection service provided by the UE that has transmitted the discovery response message is stored as "Relay Service Code (RCS)".

In Fig. 8, a period of time during which the sidelink relay function included in the corresponding terminal serving as a relay UE can be provided is stored as a relay time parameter "Service Available Time". If there is no constraint on the period of time during which the sidelink relay function can be provided, "0" is stored as the service available time. If there is a constraint on the period of time during which the sidelink relay function can be provided, the period of time during which the sidelink relay function can be provided is stored as, for example, the time in minutes.

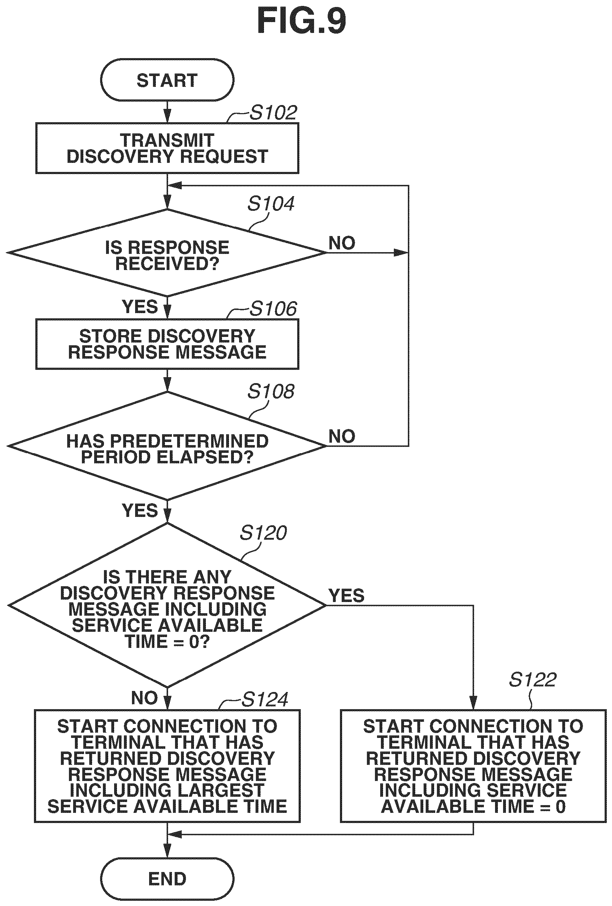

Fig. 9 is a flowchart illustrating discovery processing in the terminal 10.

In step S102 of Fig. 9, the control unit 101 of the communication device 100 (Fig. 2) composed of the terminal 10 activates the message generation unit 103 to generate a discovery request message, and the communication unit 105 performs broadcast transmission of the discovery request message.

In step S104, the control unit 101 causes the communication unit 105 to await a discovery response message to be transmitted from another terminal. If the discovery response message is received, the processing proceeds to step S106.

In step S106, the control unit 101 stores the discovery response message, the reception of which is confirmed in step S104, in the storage unit 102.

In step S108, the control unit 101 determines whether a predetermined period has elapsed after the transmission of the discovery request message. If the determination result indicates YES, the processing proceeds to step S120. If the determination result indicates NO, the processing proceeds to step S104.

In step S120, the control unit 101 activates the message analysis processing unit 204. Further, the control unit 101 analyzes the content of the discovery response message stored in step S106. Furthermore, the control unit 101 determines, based on the analysis result, whether the discovery response messages stored in step S106 include the discovery response message in which "0" is stored as "Service Available Time". If the determination result of the control unit 101 indicates YES, the processing proceeds to step S122. If the determination result indicates NO, the processing proceeds to step S124.

In step S122, the control unit 101 selects a connection destination from among the terminals (UEs) that have returned the discovery response message in which "0" is stored as "Service Available Time". Further, the control unit 101 starts the sidelink connection with the selected terminal (UE), and terminates the processing.

In step S124, the message analysis processing unit 204 checks "Service Available Time" in the discovery response message stored in step S106, and selects the terminal (UE) with the longest "Service Available Time" as the connection destination. Further, the control unit 101 starts the sidelink connection with the selected connection destination, and terminates the processing.

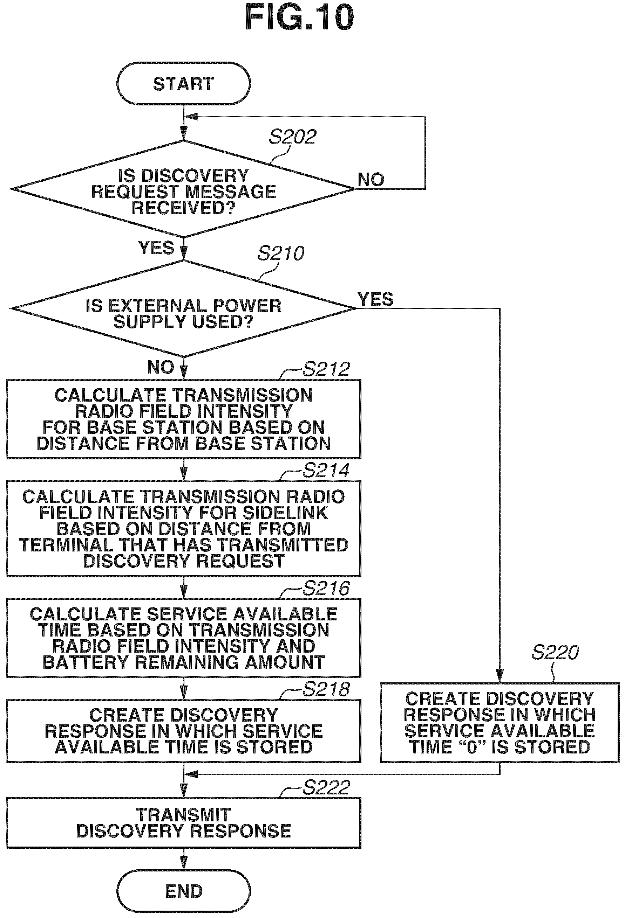

Fig. 10 is a flowchart illustrating discovery response processing in the terminal 10A, the terminal 10B, and the terminal 10C.

In step S202 of Fig. 5, the control unit 101 of the communication device 100 composed of each of the terminal 10A, the terminal 10B, and the terminal 10C causes the communication unit 105 to await a discovery request message. If the control unit 101 has received the discovery request message, the processing proceeds to step S210.

In step S210, the control unit 101 determines whether an external power supply is used as the power supply of the corresponding terminal. If the determination result indicates YES, the processing proceeds to step S220. If the determination result indicates NO, the processing proceeds to step S212. Note that if the determination result in step S210 indicates NO, the power supply of the corresponding terminal is a battery of the corresponding terminal.

In step S212, the control unit 101 calculates a transmission radio field intensity for the base station 20 based on a distance between the corresponding terminal and the base station 20. In this case, the storage unit 102 stores positional information (coordinates) of the base station 20. Positional information (coordinates) of the corresponding terminal can be obtained by a global positioning system (GPS) or the like included in the corresponding terminal. In step S212, the control unit 101 calculates the distance between the corresponding terminal and the base station 20 based on the coordinates of the base station 20 and the positional information (coordinates) of the corresponding terminal, and also calculates the transmission radio field intensity based on the calculated distance.

In step S214, the control unit 101 calculates the transmission radio field intensity between the corresponding terminal and the remote UE based on the distance from the UE (remote UE) that has transmitted the discovery request. For example, the terminal 10 serving as the remote UE may transmit the coordinates of the remote UE in a discovery request. In this case, the control unit 101 may calculate the transmission radio field intensity between the corresponding terminal and the remote UE based on the coordinates of the remote UE.

In step S216, the control unit 101 obtains a battery remaining amount in the corresponding terminal. Further, the control unit 101 calculates "Service Available Time" based on the transmission radio field intensity calculated in step S212, the transmission radio field intensity calculated in step S214, and the obtained battery remaining amount. "Service Available Time" corresponds to a time available for the corresponding terminal to continuously function as a relay UE (relay device).

In step S218, the control unit 101 causes the message generation unit 103 to generate a discovery response message. "Service Available Time" calculated in step S216 is stored in the discovery response message.

On the other hand, in step S220, the control unit 101 causes the message generation unit 103 to generate a discovery response message. In this discovery response message, "0" is stored as "Service Available Time".

In step S222, the discovery response message generated in step S218 or step S220 is transmitted to the UE that has transmitted the discovery request message, and terminates the processing.

In the above-described steps S212 to S216, "Service Available Time" is calculated based on the transmission radio field intensity. Alternatively, "Service Available Time" may be calculated based on hourly electric power usage required for the relay UE to use the relay function.

Specifically, in step S212, the control unit 101 may calculate the hourly electric power usage of all functions being used by the relay UE, and in step S214, the control unit 101 may calculate the hourly electric power usage required for a sidelink relay. In this case, in step 216, the control unit 101 can calculate "Service Available Time" based on the hourly electric power usage calculated in step S212 and step S214 and the battery remaining amount.

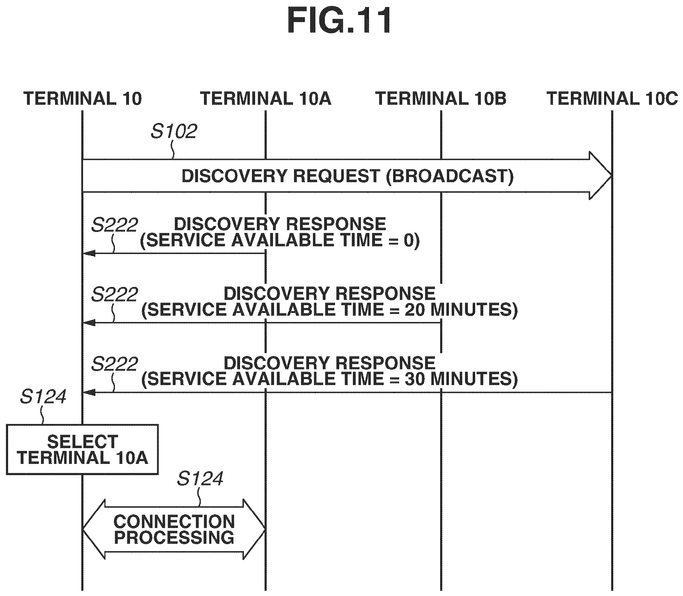

Fig. 11 is a sequence diagram illustrating an operation example of the communication system according to the present exemplary embodiment. Step numbers in Fig. 11 correspond to the processes in Fig. 9 and Fig. 10.

In the example of Fig. 11, the terminal 10A is receiving power fed from another power supply, instead of receiving power from its own battery, and there is no constraint on "Service Available Time". The terminal 10B and the terminal 10C are each driven by their own battery. "Service Available Time" calculated in steps S212 to S216 for the terminal 10B and "Service Available Time" calculated in steps S212 to S216 for the terminal 10C are 20 minutes and 30 minutes, respectively.

As illustrated in Fig. 11, the terminal 10 causes the message generation unit 103 to generate a discovery request message and performs broadcast transmission of the discovery request message (step S102).

Upon receiving the discovery request message from the terminal 10 (step S202; YES), the terminal 10A generates a discovery response message (step S220) and returns the discovery response message to the terminal 10 (step S222). In this case, the terminal 10A is receiving power fed from another power supply and there is no constraint on the service available time. Accordingly, "0" is set as the service available time in the discovery response message (step S220).

Similarly, upon receiving the discovery request message from the terminal 10 (step S202; YES), the terminal 10B generates a discovery response message (step S218) and returns the discovery response message to the terminal 10 (step S222). In this case, the terminal 10B operates using power from its own battery, and thus the calculation result of "20 minutes" is set as the service available time in the discovery response message (step S218).

Similarly, upon receiving the discovery request message from the terminal 10 (step S202; YES), the terminal 10C generates a discovery response message (step S218) and returns the discovery response message to the terminal 10 (step S222). In this case, the terminal 10C operates using power from its own battery, and thus the calculation result of "30 minutes" is set as the service available time in the discovery response message (step S218).

Next, the terminal 10 selects the terminal 10A as the connection destination UE based on "Service Available Time" in the received discovery response message, and establishes a sidelink connection with the terminal 10A (step S122).

Note that if the terminal 10A is driven by its own battery, like the terminal 10B and the terminal 10C, the terminal 10 selects the terminal with the longest "Service Available Time" in the discovery response message as illustrated in Fig. 9. Then, the terminal 10 establishes a sidelink connection with the selected terminal (step S124).

As described above, the terminal 10 selects a UE that can provide the sidelink function for a longer period of time based on the relay time parameter, thereby making it possible to establish a connection with the UE.

### <Third Exemplary Embodiment>

A third exemplary embodiment illustrates an example where a relay UE that can be connected for a longer period of time is selected and connected based on "Power Supply Type" and "Remaining Power" stored in the discovery response message.

The system configuration (Fig. 1) and the functional configuration (Fig. 2) of the communication device 100 according to the third exemplary embodiment are similar to those of the first exemplary embodiment. Differences from the first exemplary embodiment will be described below.

### [Processing Example]

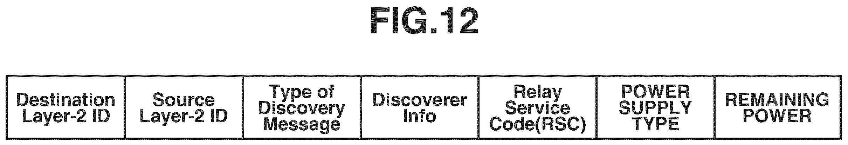

Fig. 12 is a diagram illustrating an example of a format of a discovery response message according to the third exemplary embodiment.

In Fig. 12, Layer-2 ID representing a destination of information is stored as "Destination Layer-2 ID". Layer-2 ID representing an information transmission source is stored as "Source Layer-2 ID". Information indicating the type of this message is stored as "Type of Discovery Message".

Identification information about the UE that has transmitted the discovery response message is stored as "Discover Info". Identification information about a connection service provided by the UE that has transmitted the discovery response message is stored as "Relay Service Code (RSC)".

In Fig. 12, the type of a power supply that feeds power to the terminal is stored as "Power Supply Type". Battery types that can be set include "Commercial Power Supply", "Uninterruptible Power Supply (UPS)", "Secondary Battery", and "Primary Battery". Further, the remaining amount of the battery is stored as "Remaining Power". If "Commercial Power Supply" or "UPS" is set as the power supply type, "0" is stored as the remaining power. In the present exemplary embodiment, "Power Supply Type" and "Remaining Power" correspond to the relay time parameter.

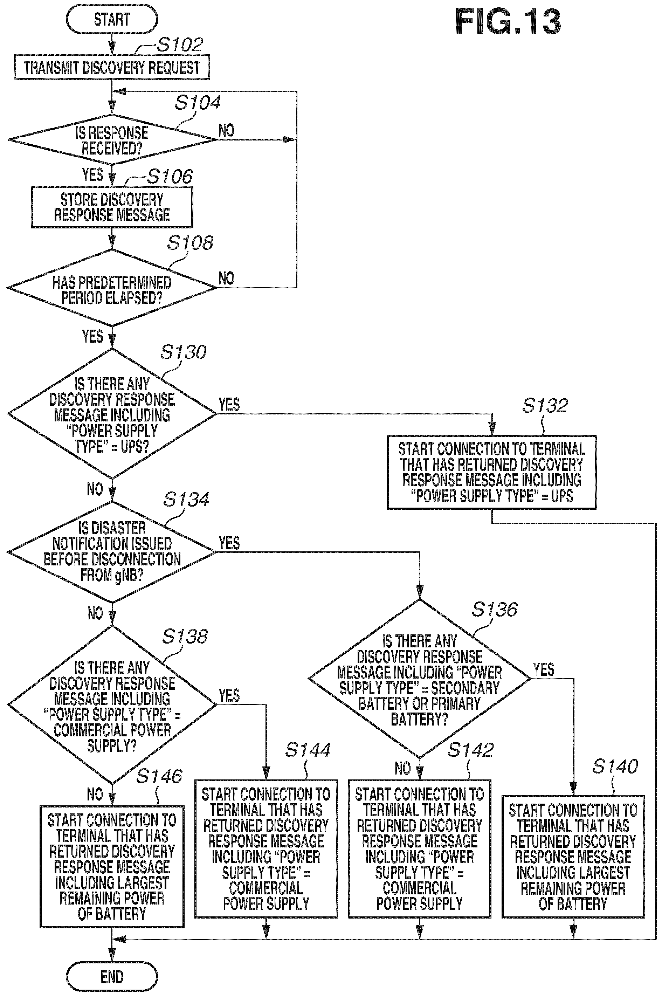

Fig. 13 is a flowchart illustrating discovery processing in the terminal 10.

In step S102 of Fig. 13, the control unit 101 of the communication device 100 (Fig. 2) composed of the terminal 10 activates the message generation unit 103 to generate a discovery request message, and the communication unit 105 performs broadcast transmission of the discovery request message.

In step S104, the control unit 101 causes the communication unit 105 to await a discovery response message to be transmitted from another terminal. If the discovery response message is received, the processing proceeds to step S106.

In step S106, the control unit 101 stores the discovery response message, the reception of which is confirmed in step S104, in the storage unit 102.

In step S108, the control unit 101 determines whether a predetermined period has elapsed after the transmission of the discovery request message. If the determination result indicates YES, the processing proceeds to step S130. If the determination result indicates NO, the processing proceeds to step S104.

In step S130, the control unit 101 activates the message analysis processing unit 204 to determine whether the discovery response messages stored in step S106 include the discovery response message in which "UPS" is stored as "Power Supply Type". If the determination result of the control unit 101 indicates YES, the processing proceeds to step S132. If the determination result indicates NO, the processing proceeds to step S134.

In step S132, the control unit 101 selects a connection destination from among the terminals (UEs) that have returned the discovery response message in which "UPS" is stored as "Power Supply Type". Further, the control unit 101 starts the sidelink connection with the selected terminal (UE), and terminates the processing.

In step S134, the control unit 101 determines whether a disaster notification has been issued from a gNB while the connection between the corresponding terminal (terminal 10) and the gNB is ensured. If the determination result of the control unit 101 indicates YES, the processing proceeds to step S136. If the determination result indicates NO, the processing proceeds to step S138.

In step S136, the control unit 101 causes the message analysis processing unit 204 to determine whether "Secondary Battery" or "Primary Battery" is stored as "Power Supply Type" in the discovery response message stored in step S106. If the determination result of the control unit 101 indicates YES, the processing proceeds to step S140. If the determination result indicates NO, the processing proceeds to step S142.

In step S140, the control unit 101 causes the message analysis processing unit 204 to check "Remaining Power" in the discovery response message stored in step S106, and selects the UE with the largest "Remaining Power" as the connection destination UE. The control unit 101 starts the sidelink connection with the selected connection destination UE, and terminates the processing.

In step S142, the control unit 101 selects a connection destination from among the terminals (UEs) that have returned the discovery response message in which "Commercial Power Supply" is stored as the power supply type. Further, the control unit 101 starts the sidelink connection with the selected terminal (UE), and terminates the processing.

In step S138, the control unit 101 causes the message analysis processing unit 204 to determine whether the discovery response messages stored in step S106 include the discovery response message in which "Commercial Power Supply" is stored as "Power Supply Type". If the determination result of the control unit 101 is YES, the processing proceeds to step S144. If the determination result indicates NO, the processing proceeds to step S146.

In step S144, the control unit 101 selects a connection destination from among the terminals (UEs) that have returned the discovery response message in which "Commercial Power Supply" is stored as the power supply type. Further, the control unit 101 starts the sidelink connection with the selected terminal (UE), and terminates the processing.

In step S146, the control unit 101 causes the message analysis processing unit 204 to check "Remaining Power" in the discovery response message stored in step S106, and selects the UE with the largest "Remaining Power" as the connection destination UE. The control unit 101 starts the sidelink connection with the selected connection destination UE, and terminates the processing.

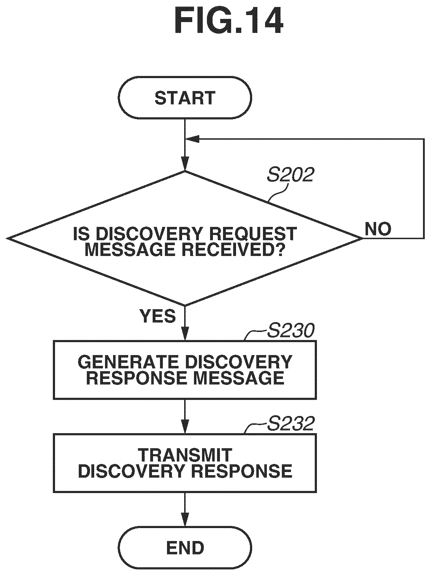

Fig. 14 is a flowchart illustrating discovery response processing in the terminal 10A, the terminal 10B, and the terminal 10C.

In step S202 of Fig. 14, the control unit 101 of the communication device 100 composed of each of the terminal 10A, the terminal 10B, and the terminal 10C causes the communication unit 105 to await a discovery request message. If the control unit 101 has received the discovery request message, the processing proceeds to step S230.

In step S230, the control unit 101 activates the message generation unit 103 to generate a discovery response message (Fig. 3). In this case, the control unit 101 checks a power supply state of the corresponding terminal, and stores information corresponding to "Power Supply Type" and "Remaining Power" in the discovery response message.

In step S232, the control unit 101 causes the communication unit 105 to transmit the discovery response message generated in step S230 to the transmission source (UE) that has transmitted the discovery request message, and terminates the processing.

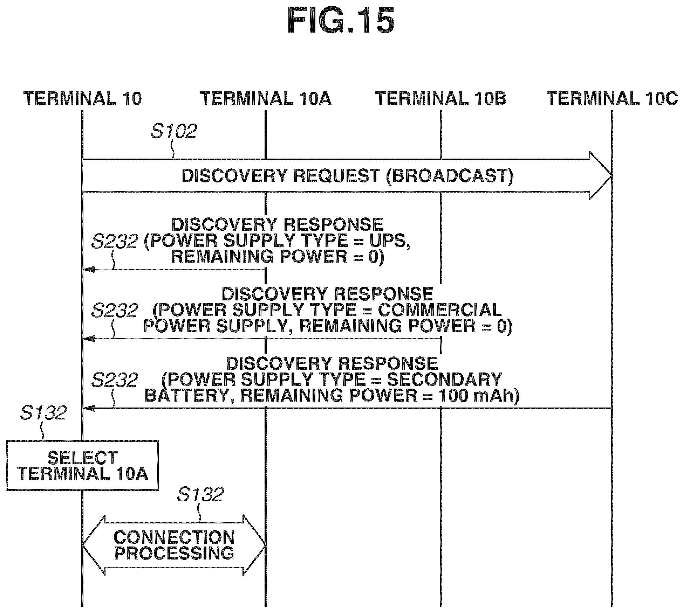

Fig. 15 is a sequence diagram illustrating an operation example of the communication system according to the present exemplary embodiment. Step numbers in Fig. 15 correspond to the processes illustrated in Fig. 13 and Fig. 14.

In the example of Fig. 15, the terminal 10A is receiving power fed from the UPS. The terminal 10B is receiving power fed from the commercial power supply, and the terminal 10C operates using power from its own secondary battery. The battery remaining amount in the terminal 10C is 100 mAh.

As illustrated in Fig. 15, the terminal 10 causes the message generation unit 103 to generate a discovery request message and performs broadcast transmission of the discovery request message (step S102).

Upon receiving the discovery request message from the terminal 10 (step S202; YES), the terminal 10A generates a discovery response message (step S230) and returns the discovery response message to the terminal 10 (step S232). In this case, since the terminal 10A is receiving power fed from the UPS, "UPS" is set as "Power Supply Type" and "0" is set as "Remaining Power" in the discovery response message.

Similarly, upon receiving the discovery request message from the terminal 10 (step S202; YES), the terminal 10B generates a discovery response message (step S230) and returns the discovery response message to the terminal 10 (step S232). In this case, since the terminal 10B is receiving power fed from the commercial power supply, "Commercial Power Supply" is set as "Power Supply Type" and "0" is set as "Remaining Power" in the discovery response message.

Similarly, upon receiving the discovery request message from the terminal 10 (step S202; YES), the terminal 10C generates a discovery response message (step S230) and returns the discovery response message to the terminal 10 (step S232). In this case, the terminal 10C operates using power from the secondary battery, and the battery remaining amount of the secondary battery is 100 mAh. Accordingly, "Secondary Battery" is set as "Power Supply Type" and "100 mAh" is set as "Remaining Power" in the discovery response message.

Next, the terminal 10 selects the terminal 10A as the connection destination UE based on the power supply type ("UPS") in the received discovery response message, and establishes a sidelink connection with the terminal 10A (step S132).

Thus, the terminal 10 can select and connect the UE that can provide the sidelink function for a longer period of time based on the relay time parameter.

Note that, as described above, in step S134 of Fig. 13, the terminal 10 determines whether a disaster notification has been issued from the gNB before the terminal 10 is disconnected from the gNB, assuming a case where the terminal 10 intends to search for a terminal serving as a relay UE in a case of outside of the coverage under a situation where it is impossible to establish a connection with a gNB of a terminal, which is the connection destination of the terminal 10, due to a blackout at the time of disaster. For example, in a case where a disaster has occurred, if the relay UE that is receiving power fed from the commercial power supply is selected, the connection with the relay UE may be disconnected due to a blackout. On the other hand, in the third exemplary embodiment, in case of a disaster, the above-described situation can be avoided by selecting a UE to be driven by a UPS or a battery. Consequently, the communication system can cope with the occurrence of a disaster and thus can perform a flexible operation depending on the situation.

The first to third exemplary embodiments described above illustrate an example where a parameter associated with a power supply is used as the relay time parameter. However, the relay time parameter is not limited to the parameter associated with the power supply.

For example, it is also possible to use a time available for each communication device to function as a relay device that can be estimated based on the position and speed of the communication device that may function as a relay device. In this case, the period of time during which communication between the communication device and the base station 20 can be maintained may be indicated by the relay time parameter.

Further, the communication device may be allowed to determine whether to function as a relay device. In this case, the relay time parameter for the communication device that is not allowed to function as a relay device may indicate that the communication device is not allowed to function as a relay device, and the communication device may ignore the received discovery request message.

Further, if the period of time or the like during which the communication device is allowed to function as a relay device is determined, the period of time or the like may be indicated by the relay time parameter.

The emergency or the type of each provided service (purpose of relay) indicated in the discovery request message may be reflected in conditions for allowing the communication device to function as a relay device. For example, in special communication with a high emergency level, a larger number of terminals (relay UEs) may be caused to function as relay devices, thereby making it possible to more reliably ensure the connection state.

The first to third exemplary embodiments described above illustrate an example where the relay time parameter is included in the discovery response message. However, a terminal that can function as a relay device may transmit a notification about the relay time parameter as a message (parameter notification signal) different from the discovery response message to the transmission source that has transmitted the discovery request message. In this case, the terminal that can function as a relay device may return a parameter notification signal in response to a request signal from the transmission source that has transmitted the discovery request message for requesting the parameter notification signal.

While the present exemplary embodiment illustrates an example where the UE with the largest "relay time parameter", such as "remaining power" or "period of time" during which the relay function can be used, is selected as the connection destination UE, the present exemplary embodiment is not limited to this example. For example, it is also possible to employ a configuration in which a screen for a list of UEs that support the sidelink function and have been found in the search is displayed on a display unit such as a touch panel included in the terminal 10 and a user is caused to select the connection destination UE via the touch panel. In this case, the control unit may display a connection destination list in which display items indicating "remaining power" and "relay time parameter" are associated with a display item (e.g., a label indicating Layer-2 ID) indicating the identification information about each UE on the touch panel. Instead of displaying the display items such as "remaining power" and "relay time parameter", display items such as indicator icons representing a remaining power or a possible relay time in several levels can be displayed. As described above, if the connection destination list is displayed, the control unit 101 determines the connection destination UE based on a user operation on the touch panel.

Thus, in the case of receiving an operation to select a UE that supports the sidelink function, the "relay time parameter" such as "remaining power" or "period of time" during which the relay function can be used is presented to the user, thereby making it possible to assist the user to perform the operation of selecting the connection destination.

As described above, according to the first to third exemplary embodiments, a terminal to be used as a relay UE can be selected based on the relay time parameter, so that a time available for each terminal to function as a relay device can be reflected in the selection result. Consequently, stable sidelink communication can be ensured.

For example, it is possible to avoid such an inconvenience that sidelink communication is undesirably established with a terminal (UE) with a small battery remaining amount and long-term sidelink communication cannot be ensured. It is also possible to avoid such an issue that, as a result of selecting a terminal (UE) with a small battery remaining amount, the connection with a network is disconnected during the communication, so that it takes a long time to establish communication with another relay UE.

### <Other Exemplary Embodiments>

While the exemplary embodiments described above assume the case of device discovery in sidelink operations for 5G New Radio (NR), the present invention is not limited to this case. Basically, the present invention can be applied to all succeeding standards of specifications of sidelink operations for 5G NR that assume direct wireless communication between UEs.

The present disclosure can also be implemented by the following processing. That is, a program for implementing one or more functions according to the above-described exemplary embodiments is supplied to a system or an apparatus via a network or a storage medium. One or more processors in a computer of the system or the apparatus may read out and execute the program. The present disclosure can also be implemented by a circuit (e.g., an application-specific integrated circuit (ASIC)) for implementing one or more functions.

The invention is not limited to the above-described exemplary embodiments, and various modifications and alterations can be made without departing from the spirit and scope of the invention. Accordingly, the claims are attached to publicize the scope of the invention.

The present invention is not limited to the above-described exemplary embodiments, and various modifications and alterations can be made without departing from the spirit and scope of the present invention. Accordingly, the following claims are attached to publicize the scope of the present invention.

The present application is based upon and claims the benefit of priority from Japanese patent application No. 2022-142811, filed on September 8, 2022, the disclosure of which is incorporated herein by reference.

### Reference Signs List

- 10: terminal (second communication device)
- 10A: terminal (first communication device)
- 10B: terminal (first communication device)
- 10C: terminal (first communication device)
- 20: base station
- 100: communication device
- 101: control unit (selection unit)
- 102: storage unit
- 103: message generation unit
- 104: message analysis processing unit
- 105: communication unit (transmission unit)

## Claims

1. A sidelink communication device comprising:
a reception unit configured to receive a detection signal for detecting each of a plurality of communication devices as a sidelink device, the detection signal being transmitted from the plurality of communication devices; and
a selection unit configured to select a target device to be connected as a relay device from among the plurality of communication devices detected upon reception of the detection signal,
wherein the reception unit receives a relay time parameter value transmitted from each of the plurality of communication devices before a connection is established with the target device,
wherein the relay time parameter is associated with a time available for each of the plurality of communication devices to function as a relay device, and
wherein the selection unit selects the target device based on the relay time parameter value corresponding to each of the plurality of communication devices.

2. The sidelink communication device according to Claim 1, wherein the relay time parameter value is included in the detection signal.

3. The sidelink communication device according to Claim 1 or 2, further comprising a transmission unit configured to transmit a discovery request signal to an outside,
wherein the detection signal is a discovery response signal as a response to the discovery request signal transmitted by the transmission unit.

4. The sidelink communication device according to Claim 3, wherein the discovery request signal transmitted by the transmission unit is a Soliciation Message for 5G ProSe direct discovery.

5. The sidelink communication device according to any one of Claims 1 to 4, wherein the relay time parameter value to be transmitted is included in a parameter notification signal different from the detection signal.

6. The sidelink communication device according to any one of Claims 1 to 5,
wherein the relay time parameter indicates whether each of the plurality of communication devices is receiving power fed from a power supply other than a battery of its own communication device, and
wherein the selection unit selects, as the target device, a communication device that is receiving power fed from the power supply other than the battery of its own communication device from among the plurality of communication devices.

7. The sidelink communication device according to any one of Claims 1 to 5,
wherein the relay time parameter indicates a remaining amount of a battery as a power supply of the target device, and
wherein the selection unit selects, as the target device, a communication device with the remaining amount of the battery being largest or more than or equal to a threshold from among the plurality of communication devices.

8. The sidelink communication device according to any one of Claims 1 to 5,
wherein the relay time parameter indicates a remaining amount of a battery as a power supply of the target device and hourly electric power usage of the target device, and
wherein the selection unit selects the target device based on the remaining amount of the battery and the electric power usage.

9. The sidelink communication device according to any one of Claims 1 to 5,
wherein the relay time parameter indicates whether the target device is receiving power fed from a commercial power supply, and
wherein the selection unit selects, as the target device, a communication device that is receiving power fed from a power supply other than the commercial power supply from among the plurality of communication devices.

10. A sidelink communication device comprising:
a transmission unit configured to transmit a detection signal for causing another sidelink device to detect the sidelink communication device as a sidelink device,
wherein the transmission unit transmits a relay time parameter value associated with a time available for the sidelink communication device to function as a relay device to the other sidelink device before a connection is established with the other sidelink device.

11. The sidelink communication device according to Claim 10, wherein the relay time parameter value is included in the detection signal.

12. The sidelink communication device according to Claim 10 or 11, further comprising a reception unit configured to receive a discovery request signal transmitted from another sidelink device,
wherein the discovery request signal received by the reception unit is a Soliciation Message for 5G ProSe direct discovery, the detection signal is a response to the Soliciation Message, and the response includes the relay time parameter value.

13. A sidelink communication device comprising:
a transmission unit configured to transmit a detection signal for causing another sidelink device to detect the sidelink communication device as a sidelink device,
wherein the transmission unit transmits information indicating a battery remaining amount of the sidelink communication device to the other sidelink device before a connection is established with the other sidelink device.

14. A control method for a communication device, comprising:
performing reception control to receive a detection signal for detecting the communication device as a sidelink device, the detection signal being transmitted from each of a plurality of communication devices;
obtaining a value of a relay time parameter transmitted from each of the plurality of communication devices before a connection is established with a target device to be connected as a relay device; and
selecting the target device from among the plurality of communication devices detected upon reception of the detection signal,
wherein the relay time parameter is associated with a time available for each of the plurality of communication devices to function as a relay device, and
wherein in the selection, the target device is selected based on the value of the relay time parameter corresponding to each of the plurality of communication devices.

15. The control method according to Claim 14, wherein in the obtaining, the value of the relay time parameter is obtained from the detection signal.

16. A control method for a communication device, comprising:
performing transmission control to transmit a detection signal for causing another sidelink device to detect the communication device as a sidelink device,
wherein in the transmission control, before a connection is established with the other sidelink device, a relay time parameter value associated with a time available for the communication device to function as a relay device is transmitted to the other sidelink device.

17. A control method for a communication device, comprising:
performing transmission control to transmit a detection signal for causing another sidelink device to detect the communication device as a sidelink device,
wherein in the transmission control, before a connection is established with the other sidelink device, the communication device transmits information indicating a battery remaining amount of the communication device to the other sidelink device.

18. A program for causing a computer to execute a control method for a communication device according to any one of Claims 14 to 17.

19. A sidelink communication system comprising:
one or more first communication devices; and
a second communication device,
wherein each of the one or more first communication devices includes a transmission unit configured to transmit a detection signal for detecting the one or more first communication devices as a sidelink device,
wherein the second communication device includes:
a reception unit configured to receive the detection signal transmitted from the one or more first communication devices; and
a selection unit configured to select a target device to be connected as a relay device from among a plurality of first communication devices detected by the detection signal in a case where the plurality of first communication devices is detected as a result of receiving the detection signal by the reception unit,
wherein the reception unit receives a value of a relay time parameter transmitted from the one or more first communication devices before a connection is established with the target device,
wherein the relay time parameter is associated with a time available for each of the one or more first communication devices to function as a relay device, and
wherein the selection unit selects the target device based on the value of the relay time parameter corresponding to each of the plurality of first communication devices.
